# EUROPEAN PATENT APPLICATION

(11) **EP 2 660 762 A1**
(43) Date of publication of application: **06.11.2013**
(21) Application number: 12166730.7
(22) Date of filing: 04.05.2012
(51) Int. Cl.: G06Q 30/00

(54) **Interactive advertising on a mobile device**

(71) Applicant: BlackBerry Limited, Waterloo, ON N2L 3W8 (CA)
(72) Inventor: Hymel, James, Allen, Waterloo, Ontario N2L 3W8 (CA)
(74) Representative: MERH-IP Matias Erny Reichl Hoffmann

(57) **Abstract**

A method and apparatus for delivering advertising via a mobile device are disclosed. Receivable codes (200) are captured by the mobile device, for example by a camera. The codes may be QR codes, codes with fiduciary markers, or the like. Plural interactive value offers (715a, 715b, 715n) are generated, each directed toward a product or service associated with at least one code. The interactive value offers are adjusted (720) in response to each other, and presented via a user interface. Other features include: providing navigation directions (530) from a current location to a location where a value offer can be fulfilled, processing location information to gauge an effect (620) of the interactive value offer on the user and adjusting the offer (630) based on said effect, adjusting the offer (1030) based on a current interest in the offer, and providing social networking opportunities (920) in conjunction with the offer.

## Description

### TECHNICAL FIELD

The present technology relates generally to mobile devices, and, in particular, to interactive advertising on a mobile device.

### BACKGROUND

Delivery of additional information, such as advertising to mobile devices has become commonplace. For example, scannable QR codes, linked to advertising of various products and services, are currently a familiar sight in stores, posters, public places, and the like. Advertising may also be sent wirelessly to mobile devices. However, advertising on mobile devices faces the same challenges as advertising in general, such as getting the attention of a desired audience and convincing them to take advantage of a certain value proposition.

Recently, Augmented Reality (AR) game cards have been introduced for gaming devices such as the Nintendo 3DS^{™}. Pointing the camera of a suitable game device at such a game card causes the game device screen to display an animated and possibly interactive image overlaid with the camera image. AR game cards are typically used only for entertainment purposes.

Various solutions have been proposed for delivery of advertising to mobile devices. However, these solutions may fall short in one or more of: providing customized features for retaining engagement of target audience members, providing relevant, customized information to target audience members, providing an appropriate value offer to each target audience member; and customizing advertising offers toward target audience members. In addition, novel advertising approaches often tend to capture audience attention better than existing advertising approaches.

Therefore there is a need for a method and apparatus for delivering advertising via a mobile device that provides an alternative to those solutions of the prior art.

### SUMMARY

An object of the present technology is to provide a method and apparatus for delivering interactive advertising via a mobile device. In accordance with an aspect of the present technology there is provided a method of delivering advertising via a mobile device, the method comprising: capturing one or more receivable codes presented to the mobile device; generating one or more interactive value offers, each of the one or more interactive value offers directed toward a product or service associated with at least one of the one or more receivable codes, each of the one or more interactive value offers adjusted in response to at least one other interactive value offer; and presenting the one or more interactive value offers via a user interface of the mobile device.

In accordance with another aspect of the present technology there is provided a mobile device comprising: a code capture module configured to capture one or more receivable codes presented to the mobile device; an advertising module operatively coupled to the code capture module, the advertising module configured to generate one or more interactive value offers, each of the one or more interactive value offers directed toward a product or service associated with at least one of the one or more receivable codes, each of the one or more interactive value offers adjusted in response to at least one other interactive value offer; and a user interface module operatively coupled to the advertising module, the user interface module configured to present the one or more interactive value offers via a user interface of the mobile device.

In accordance with another aspect of the present technology there is provided a system comprising: a mobile device comprising: a code capture module configured to capture one or more receivable codes presented to the mobile device; and a system-level advertising module operatively coupled to the code capture module, the system-level advertising module configured to generate one or more interactive value offers, each of the one or more interactive value offers directed toward a product or service associated with at least one of the one or more receivable codes, each of the one or more interactive value offers adjusted in response to at least one other interactive value offer; the mobile device further comprising a user interface module operatively coupled to the system-level advertising module, the user interface module configured to present the one or more interactive value offers via a user interface of the mobile device.

In accordance with another aspect of the present technology there is provided a computer program product for delivering advertising via a mobile device, the computer program product comprising code which, when loaded into memory and executed on a processor of a mobile device, is adapted to perform the following: capturing one or more receivable codes presented to the mobile device; generating one or more interactive value offers, each of the one or more interactive value offers directed toward a product or service associated with at least one of the one or more receivable codes, each of the one or more interactive value offers adjusted in response to at least one other interactive value offer; and presenting the one or more interactive value offers via a user interface of the mobile device.

### BRIEF DESCRIPTION OF THE DRAWINGS

Further features and advantages of the present technology will become apparent from the following detailed description, taken in combination with the appended drawings, in which:

FIG. 1 illustrates a scenario comprising a mobile device and machine-readable codes, in accordance with embodiments of the present technology.

FIG. 2 illustrates aspects of a machine-readable code, in accordance with embodiments of the present technology.

FIG. 3 illustrates operations associated with recognition and processing of a machine-readable code, in accordance with embodiments of the present technology.

FIG. 4 illustrates operations associated with the configuration of an interactive value offer, in accordance with embodiments of the present technology.

FIG. 5 illustrates aspects of providing navigation directions in association with an interactive value offer, in accordance with embodiments of the present technology.

FIG. 6 illustrates aspects of adjusting an interactive value offer based on user behaviour, in accordance with embodiments of the present technology.

FIG. 7 illustrates aspects of adjusting interactive value offers in response to each other, in accordance with embodiments of the present technology.

FIG. 8 illustrates a user display showing plural interacting value offers, in accordance with embodiments of the present technology.

FIG. 9 illustrates aspects of providing a social networking opportunity in association with an interactive value offer, in accordance with embodiments of the present technology.

FIG. 10 illustrates aspects of adjusting an interactive value offer based on current interest in the offer, in accordance with embodiments of the present technology.

FIG. 11 illustrates a mobile device, in accordance with embodiments of the present technology.

FIG. 12 illustrates functional aspects of a mobile device and associated system, in accordance with embodiments of the present technology.

It will be noted that throughout the appended drawings, like features are identified by like reference numerals.

### DETAILED DESCRIPTION

The present technology addresses a problem pertaining to advertising via mobile devices. The present disclosure provides a method and apparatus for delivering interactive advertising via a mobile device, and in particular provides for generation of interactive value offers which may be adjusted in response to each other. Interactive advertising may be delivered to the mobile device via a receivable code such as a scannable code, machine-readable code, a wireless data message, or the like, or a combination thereof. Additionally or alternatively, a generated interactive value offer may provide one or more of: navigation directions to a user in relation to the offer, adjustment of the offer in response to a gauged effect on the user, adjustment of the offer in response to information obtained from other mobile devices, and social networking opportunities in relation to the offer. To facilitate the above, the interactive value offer may be presented in an animated manner, for example via augmented reality. Conventionally, advertising offers presented via mobile devices are generally static in nature. However, depending on various factors, the perceived value of the offer may change. Conventional advertising does not provide a means to respond to such situations, which may result in reduced advertising effectiveness. A further related problem is that conventional advertising does not provide a dynamic means for discovering what other offers a particular user might currently be considering, and leveraging this information to increase attractiveness of a particular advertisement.

The present technology addresses the foregoing technical problems by providing a method, apparatus, system and computer program product for delivering interactive advertising via a mobile device, as described herein. The interactive advertising may be delivered via scannable codes or wirelessly, for example.

Accordingly, an aspect of the present technology provides a method for delivering advertising via a mobile device. The method comprises capturing one or more receivable codes presented to the mobile device. The method further comprises generating one or more interactive value offers, each of the one or more interactive value offers directed toward a product or service associated with at least one of the one or more receivable codes, each of the one or more interactive value offers adjusted in response to another interactive value offer, for example in competition with each other, in collaboration with each other, or the like, or a combination thereof. In some embodiments, each of a plurality of interactive value offers is adjusted in response to at least one other of the plurality of interactive value offers. The method further comprises presenting the one or more interactive value offers via a user interface of the mobile device.

In some embodiments, the receivable code is a machine-readable code. Thus, for example, the method may comprise capturing one or more images of one or more machine-readable codes presented to the mobile device, for example using a camera, a three-dimensional camera, or the like. A machine-readable code may thus generally be an optically scannable code.

In some embodiments, the receivable code is embedded in a wireless signal delivered to the mobile device. Wireless signals may be delivered via a cellular, GPRS network, or WWAN network, Wi-Fi^{™}, Bluetooth^{™}, or other wireless protocol. The signal may be delivered via packet data, SMS, email, or other container, as would be readily understood by a worker skilled in the art.

Another aspect of the present technology provides a mobile device configured for delivery of interactive advertising. The mobile device comprises a code capture module configured to capture one or more receivable codes presented to the mobile device. The mobile device further comprises an advertising module operatively coupled to the code capture module, the advertising module configured to generate one or more interactive value offers, each of the one or more interactive value offers directed toward a product or service associated with at least one of the one or more receivable codes, the one or more interactive value offers adjusted in response at least one other interactive value offer. For example, a first interactive value offer may be adjusted at least in part in response to a second interactive value offer, and the second interactive value offer may be adjusted at least in part in response to the first interactive value offer. The advertising module may comprise or utilize various components of the mobile device such as a processor, memory, location determination system, communication system, and the like. The advertising module may further be operatively coupled, for example via a wireless network, to remote components such as an advertising server, the advertising server configured to provide operational information to the advertising module. The mobile device further comprises a user interface module operatively coupled to the advertising module, the user interface module configured to present the one or more interactive value offers via a user interface of the mobile device.

In some embodiments, the mobile device comprises an image capture module configured to capture one or more images of one or more machine-readable codes presented to the mobile device. The receivable codes may thus be in the form of machine-readable codes, and the code capture module may comprise or be in the form of the image capture module. The image capture module may comprise a camera, a three-dimensional camera, or the like.

Another aspect of the present technology provides a system configured for delivery of interactive advertising via a mobile device. The system comprises a mobile device comprising a code capture module configured to capture one or more receivable codes presented to the mobile device. The system further comprises a system-level advertising module operatively coupled to the code capture module, the system-level advertising module configured to generate one or more interactive value offers, each of the one or more interactive value offers directed toward a product or service associated with at least one of the one or more receivable codes, each of the one or more interactive value offers adjusted in response to at least one other interactive value offer. The system-level advertising module may comprise or utilize various components of the mobile device such as a processor, memory, location determination system, communication system, and the like. The system-level advertising module may further comprise remote components such as an advertising server, the advertising server configured to provide operational information to the advertising module, the advertising server coupled to the mobile device, for example via a wireless network. The mobile device further comprises a user interface module operatively coupled to the advertising module, the user interface module configured to present the one or more interactive value offers via a user interface of the mobile device.

Another aspect of the present technology provides a computer program product for delivering advertising via a mobile device. The computer program product comprises code which, when loaded into memory and executed on a processor of a mobile device, a server, or a combination thereof, is adapted to perform operations associated with methods and apparatus as described herein.

In some embodiments, by engaging the user through interaction, embodiments of the present technology may increase effectiveness of flyers or coupons, such as AR-based coupons, or other advertisements comprising machine-readable codes. Keeping the user engaged may, for example, lead to an increased probability that the user will be more committed to redeeming the offer, and may share the offer with friends, for example. Interaction may comprise providing turn-by-turn directions, adjusting a value offer based on one or more inputs and at one or more times, providing further details related to the value offer, providing social networking opportunities to enhance the value offer, or the like, or a combination thereof.

The term "value offer" is used to describe an offer made to a potential customer, promising a product, service, or the like in exchange for a predetermined consideration, such as an asking price. In order to be feasible, the party making the offer generally should perceive a benefit which justifies the expense of providing the product or service. In order to find the offer attractive, the potential customer generally should also perceive a benefit which justifies providing the asked-for consideration. The benefits and costs may include tangible factors, intangible factors, or a combination thereof.

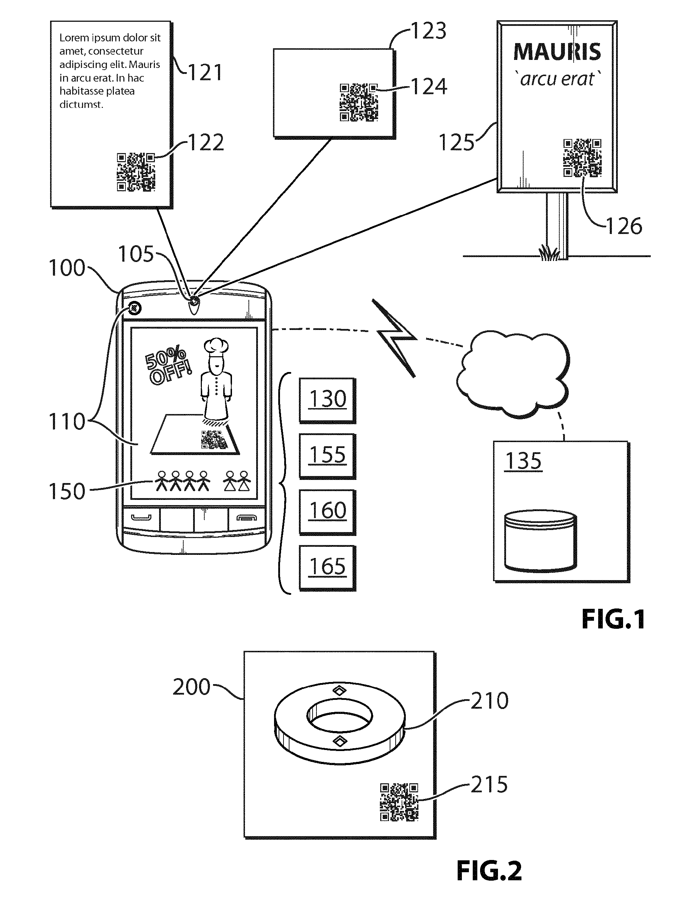

FIG. 1 illustrates a scenario in accordance with an embodiment of the present technology. A mobile device **100** comprises an image capture module **105,** such as a camera, and a user interface module **110,** for example including a display screen and optionally a speaker or audio output. The image capture module is an example of a more general code capture module. Additionally or alternatively, the mobile device **100** may comprise a code capture module which is configured to capture receivable codes transmitted wirelessly thereto. The user interface module is configured to present the interactive value offer to the user, and optionally to receive user input via an input component such as a touch screen, voice recognition module, or the like. A plurality of machine-readable codes **120, 122, 124** are illustrated, each code associated with a merchant, retailer, mall or shopping district, service provider, tour provider, concert, event, festival, individual or organization, restaurant, product, other pedestrian activities, or the like, or a combination thereof. Each machine-readable code may be provided on portable medium, such as a flyer or coupon **121, 123,** or on a sign **125,** video display, or other installation. The image capture module **105** is configured for scanning the machine-readable codes. Scanning may comprise image recognition of the machine-readable code, for example by matching scanned characteristics, such as shape, colour, pattern, and the like, of the code to corresponding characteristics stored in memory. Scanning may additionally or alternatively comprise reading data stored in the machine-readable code, such as data stored in a QR code.

Once a machine-readable code is scanned, or more generally once a receivable code is captured, an advertising module **130** of the mobile device **100** is configured to generate an interactive value offer for presentation to the user. The advertising module may be realized as a function of various components of the mobile device, such as memory, a microprocessor, and wireless communication components. The advertising module may obtain configuration data from one or more of: the machine-readable code, local memory of the mobile device, and a remote advertising server **135.** In some embodiments, the advertising server may contain substantially static information. In some embodiments, the advertising server may contain information updated in real-time, for example based on information uploaded from various merchants, other mobile devices, and the like. The advertising module may be operatively coupled to one or more other components of the mobile device, such as a location determination module **155,** and may be configured to adjust the interactive value offer based on input from same.

The mobile device **100** may further comprise a location determination module **155,** such as a GPS or other module. The mobile device **100** may further comprise a motion detection module **160,** an orientation detection module **165,** or both. The motion detection module, orientation detection module, or both, may comprise one or more accelerometers, gyroscopes, magnetometers, or the like, or a combination thereof. The motion detection module is configured to detect fine motion of the mobile device, for example due to a user taking the mobile device out and moving it up to their eyes to look at it, or shaking or tilting the mobile device. The orientation detection module is configured to determine an orientation of the mobile device in space, for example relative to compass directions and vertical directions.

FIG. 1 also illustrates an indication **150,** provided by the user interface module **110,** of current interest in the interactive value offer. The indication **150** represents a number of other people, and certain information such as their gender, currently interested in similar interactive value offers at the same venue. Selecting one of the icons representing the other people may initiate a social networking interaction.

### Receivable Codes

The present technology comprises capturing receivable codes by the mobile device. The receivable code contains information related to one or more interactive value offers to be presented on the mobile device. The receivable code may be a machine-readable code as described herein. The receivable code may alternatively be a code received wirelessly, that is via radio signals in accordance with a predetermined protocol, by the mobile device.

In some embodiments, a receivable code may be transmitted wirelessly to the mobile device from a central server. The central server may transmit the receivable code via GPRS, SMS, email, a packet data network, or the like. A data-capable cellular network or WWAN, to which the mobile device is communicatively connected, may be used to facilitate communication of the receivable code, as would be readily understood by a worker skilled in the art.

In some embodiments, a central server may monitor the location of the mobile device and transmit a receivable code relevant to the current location. For example, the receivable code may relate to an interactive value offer for a restaurant nearby to the mobile device location.

In some embodiments, a receivable code may be transmitted wirelessly to the mobile device from a local transmitter. Receivable codes transmitted from a local transmitter may generally be related to interactive value offers for nearby products or services. This allows the receivable codes to be automatically relevant to the current location of the mobile device. The local transmitter may be a wireless access point, Bluetooth^{™} device, or the like. In some embodiments, the local transmitter may offer services such as free or subsidized Internet access to mobile devices, or other data services. Users will thus be enticed to connect to the local transmitter to access valuable data services. Once connected, the receivable codes may be transmitted to the mobile device. In some embodiments, the user may be asked to agree to receive the receivable codes as a condition of access to data services being offered.

In some embodiments, a receivable code may be transmitted wirelessly to the mobile device directly from a peer mobile device. Direct peer-to-peer propagation of receivable codes may introduce a further social aspect to the present technology. Various peer-to-peer wireless communication technologies and protocols, either mediated by a network or via a direct communication link between mobile devices, may be used for this purpose, as would be readily understood by a worker skilled in the art.

In some embodiments, the receivable code stores sufficient information about the associated value offer that a mobile device can construct the interactive value offer and its associated behaviours based solely on the data content of the receivable code, and on data stored in memory of the mobile device.

In some embodiments, the receivable code includes a reference to a remote data location, such as a database reference, web address, URL, or the like. This may be appropriate when the receivable code is embedded in a limited container, such as an SMS message. The mobile device may then be configured to contact an appropriate remote server, for example via a wireless network, and use the reference to obtain information about the associated value offer. This obtained information is then used in constructing the interactive value offer and its associated behaviours. The mobile device may also provide additional information to the server, such as location information, user information, other receivable codes captured, or other value offers in effect, or the like, or a combination thereof. In some embodiments, the remote data may be used to augment locally stored data. In some embodiments, the interactive value offer may be based substantially entirely on the remote data.

### Machine-Readable Codes

Embodiments of the present technology relate to scanning of machine-readable codes, for example by taking a picture, series of pictures, or video image of same, using a mobile device. The machine-readable code is a receivable code containing information related to one or more interactive value offers to be presented on the mobile device.

In some embodiments, the machine-readable code is a QR-code, one-dimensional barcode, two-dimensional barcode, high-capacity colour barcode (HCCB), Microsoft Tag^{™}, or similar code. For example, as will be readily understood by a worker skilled in the art, a QR-code can store up to 7,089 numeric characters, 4,296 alphanumeric characters, or 2,953 bytes. Error correction coding and/or data compression may be employed, which may affect the storage capacity.

In some embodiments, the machine-readable code comprises machine-readable data as well as a fiduciary marker. For example, the machine-readable code may be or resemble an Augmented Reality (AR) game card such as is associated with the Nintendo^{™} 3DS^{™} system.

In some embodiments, the machine-readable code may comprise a relatively small number (as few as one) of optically recognizable symbols, rather than a larger number of symbols arranged in a pattern, as is the case in a QR code. For example, the machine-readable code may comprise a substantially unique picture or logo, which can be optically recognized and associated with data for a predetermined interactive value offer. For example, the machine-readable code may be a version of a corporate logo, trademark, or the like. The mobile device may then be configured to search for a list of predetermined optically recognizable symbols when scanning, for example based on parameters stored in local memory and using optical symbol recognition algorithms as would be readily understood by a worker skilled in the art. Optical recognition of the machine-readable code may comprise recognition of characteristics of the such as shape, colour, pattern, or the like, or a combination thereof. Currently, recognition of Nintendo^{™} 3DS^{™} game cards is of this type.

In some embodiments parameters of optically recognizable symbols may at least in part be stored in remote memory, for example of a remote server. In further embodiments, optical recognition operations may also be performed at least in part by the remote server. Automatic recognition of such a symbol may be performed remotely, for example by passing parameters obtained during a scan mode to a remote server for processing thereby.

A fiduciary marker incorporated into the machine-readable code may be used to facilitate presentation of an interactive value offer incorporating augmented reality elements. The fiduciary marker may be a separate component of the code, for example a border or shape incorporated therein, or it may be defined as the code or a portion or property thereof.

In some embodiments, when the mobile device captures a photo or video image which includes a fiduciary marker, the mobile device is configured to present, for example on a display thereof, the image along with an overlaid animation or still image associated with the value offer. The overlay may be configured based on the fiduciary marker. For example, the overlay may be sized and oriented to correspond to a size and orientation of the fiduciary marker as it appears to the mobile device camera. In some embodiments, the mobile device may be configured to modify the displayed value offer image based on an angle at which the fiduciary marker is captured, thereby giving a more realistic impression of three-dimensional perspective. Such processing and modification would be readily understood to a worker skilled in the art.

In some embodiments, one or more of the machine-readable codes are provided on a handheld item such as a flyer, coupon, card, or the like. In these embodiments, a user can carry a copy of the machine-readable code with them, referring to it as necessary. This may be appropriate, for example, in embodiments where a location at which the value offer can be fulfilled is at a different location from the user, where navigation directions are provided in conjunction with the value offer, or both. Thus, a user can carry the handheld item with them and refer to the machine-readable code as necessary while travelling to the location at which the offer is to be fulfilled.

In some embodiments, one or more of the machine-readable codes are provided in a substantially fixed installation, such as a sign, directory, poster, or the like. This may be appropriate, for example, in embodiments where a location at which the value offer can be fulfilled is nearby, or where the value offer is persistent within the mobile device, for example where the mobile device is configured to store the value offer and recall the value offer without requiring further reference to the machine-readable code.

In some embodiments, when possible, the machine-readable code stores sufficient information about the associated value offer that a mobile device can construct the interactive value offer and its associated behaviours based solely on the data content of the machine-readable code, and on data stored in memory of the mobile device. Information may be stored as optically recognizable patterns in the machine-readable code, for example in the case of a QR code or AR code.

In some embodiments, the machine-readable code includes a reference to a remote data location, such as a database reference, web address, URL, or the like. The mobile device may then be configured to contact an appropriate remote server, for example via a wireless network, and use the reference to obtain information about the associated value offer. This obtained information is then used in constructing the interactive value offer and its associated behaviours. The mobile device may also provide additional information to the server, such as location information, user information, other machine-readable codes scanned, other receivable codes captured, or other value offers in effect, or the like, or a combination thereof. In some embodiments, the remote data may be used to augment locally stored data. In some embodiments, the interactive value offer may be based substantially entirely on the remote data.

In some embodiments, the machine-readable code does not contain machine readable data *per se,* but rather, as described above, comprises an optically recognizable symbol or picture, which prompts retrieval of data stored locally in the mobile device, data stored remotely at an advertising server, or locally stored data augmented by remotely stored data. For example, the mobile device may be configured to scan for a predetermined set of symbols or pictures based on locally stored parameters. Recognition of such a symbol or picture prompts access to a memory location (local, remote, or a combination thereof), which contains information about the associated value offer, for example used in constructing the interactive value offer and its associated behaviours.

In some embodiments, one machine-readable code may be representative of plural interactive value offers for products, services, or the like, or a combination thereof. For example, a single machine-readable code provided in a mall or food court may trigger plural interactive value offers, each for a different merchant in that mall or restaurant. In some embodiments, the plural interactive value offers may be adjusted in response to each other.

FIG. 2 illustrates aspects of a machine-readable code 200, in accordance with embodiments of the present technology. As illustrated, the machine-readable code **200** comprises an optically recognizable symbol **210** and a data portion **215.** Scanned parameters, such as size, shape, colour and details, of the optically recognizable symbol **210** may be matched to parameters stored in memory. The code **200,** or the optically recognizable symbol portion **210** may also act as a fiduciary marker. The data portion **215,** here shown as a separate component but potentially integrated into the symbol **210** or optionally left out, can be scanned and transformed into configuration data or a reference to configuration data, by the mobile device.

### Interactive Value Offer

Embodiments of the present technology relate to generating and presenting an interactive value offer, or a plurality of interactive value offers. Each of the interactive value offers may be directed toward a product or service, or the like, associated with at least one captured receivable code, such as a scanned machine-readable code.

An interactive value offer may be dynamic or animated. An interactive value offer may comprise a three-dimensional augmented reality animation, for example including an avatar. An interactive value offer may be configured to interact with the user, for example by reading and responding to user input provided at a user interface in a predetermined manner. An interactive value offer may be configured to interact with location information. An interactive value offer may be configured to interact with other value offers in a predetermined manner. An interactive value offer may be configured to interact with information received from a remote server, such as updates regarding the value offer. An interactive value may be configured to facilitate social networking interaction with other mobile devices or users.

In some embodiments, an interactive value offer may be configured based on a set of parameters associated with a receivable code. Such parameters may be embedded as data in the receivable code, or retrieved from local memory, remote memory, or a combination thereof, for example based on an indicator, pointer or reference embedded as data in the receivable code. In the case of a machine-readable code, parameters may be retrieved based on an optically recognized feature of the machine-readable code.

In various embodiments, parameters used to configure an interactive value offer may be indicative of one or more of the following: an indication of one or more products or services being offered, at least one location at which the offer can be redeemed, an asking price for the offer, parameters related to how the offer is to be presented, parameters related to conditions under which the offer may be adjusted, parameters related to how the offer is to be adjusted under said conditions, and parameters related to additional information which may be incorporated into the offer.

In some embodiments, parameters related to how the offer is to be presented include parameters for customizing the overall look and feel of the interactive value offer. In some embodiments, the engine may comprise a customizable avatar, and the parameters may be used to adjust the look (e.g. colour, height, size and shape proportions, hair colour, features, behaviour, etc.) of the avatar. The parameters may further be used to direct the behaviour of the avatar, for example how they appear to move on the screen, how they appear to communicate with the user, and the like. For example, an avatar representing an ethnic restaurant may be customized to appear as a stylized person representing that ethnicity. An avatar representing a bicycle shop may appear riding a bicycle. Parameters may also be used to adjust background colour, sound, special logos or indicia, or other attributes. The avatar may be presented as a three-dimensional augmented reality avatar, overlaid on a camera image background comprising a fiduciary marker of the machine-readable code.

For example, in one embodiment, the mobile device may comprise an avatar generation and animation engine. Avatars of various types, and animation and behaviour of the avatars, may be generated by passing parameters to the engine. The avatars may be configured to deliver short messages passed as parameters thereto. Animations may therefore be generated for presentation on the mobile device based on a relatively small parameter set. In some embodiments, all the required parameters may be embedded in the receivable code. In some embodiments, some of the required parameters may be obtained from a remote server using a reference embedded in the receivable code or stored in local memory of the mobile device.

In some embodiments, predetermined avatars may be used, and the configuration parameters may thus be wholly dedicated to defining behaviour of the avatars and details of the value offer to be presented, and optionally how the value offer may be adjusted.

In some embodiments, parameters related to how the offer is to be presented include a reference to remotely stored content, such as pre-recorded advertisements, animations, images, or the like. The mobile device may retrieve the remotely stored content, for example via a wireless connection, and present it to the user as part of the value offer.

In some embodiments, parameters related to conditions under which the offer may be adjusted, and parameters related to how the offer is to be adjusted under said conditions, may be included in order to specify how the value offer interacts based on location information, how the value offer interacts based on user input or other information indicative of user behaviour, how the value offer interacts with other value offers, how the value offer interacts with information related to current interest in the value offer by other users, or the like, or a combination thereof.

In some embodiments, an interactive value offer may be driven by a software agent. The software agent may comprise the parameters related to conditions under which the offer may be adjusted, along with instructions for how to adjust the offer under certain conditions. Plural software agents, each representing different sets of one or more interactive value offers, may be configured to interact with each other, for example to compete or collaborate with each other.

In some embodiments, when the receivable code is a machine-readable code, the interactive value offer or aspects thereof, is presented at a higher intensity when the machine-readable code is being presented to the mobile device than when the machine-readable code is not being presented to the mobile device. For example, the interactive value offer may be presented only when a coupon, flyer, or the like, having the machine-readable code, is presented to a camera of the mobile device. The user may then train the camera on the coupon, flyer, or the like, when they wish to view details, such as navigation directions to a location where the value offer can be redeemed, current interest in the offer, current conditions at a destination location, or the like.

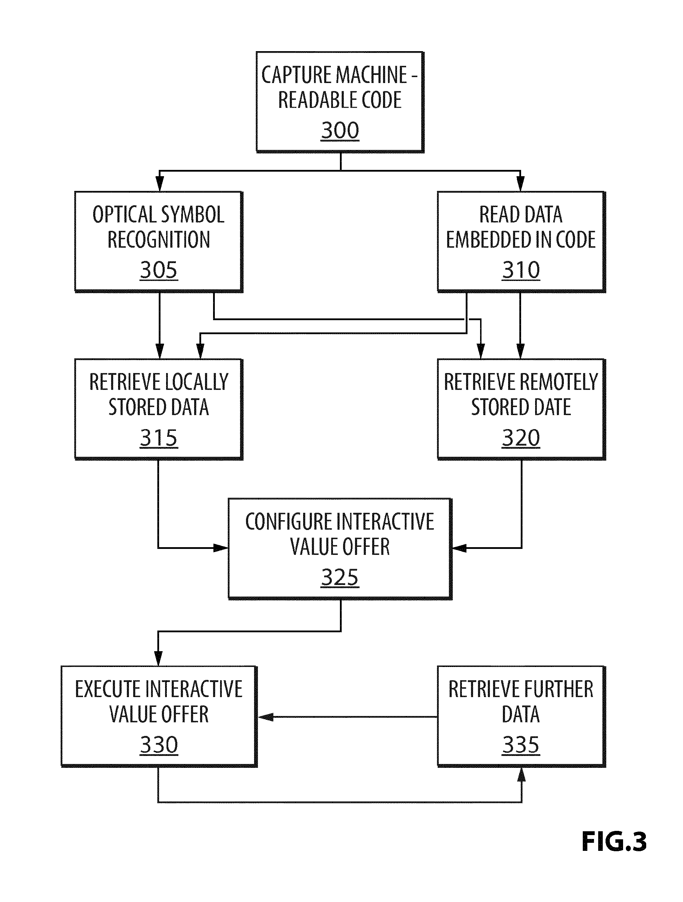

FIG. 3 illustrates operations associated with recognition and processing of a machine-readable code, in accordance with embodiments of the present technology. An image of the machine-readable code is captured **300,** for example by pointing the mobile device camera at the code and initiating a "capture code" option. An optical symbol recognition operation **305** is then performed on the image data, to determine whether the image contains a symbol belonging to a database of known symbols. The database is stored in local memory of the mobile device, or optionally additionally or alternatively in remote memory. Each entry in the symbol database further contains configuration data for an associated interactive value offer, or a reference to external configuration data, stored in local or remote memory. If a match is found, the appropriate configuration data is retrieved **315** from local memory, retrieved **320** from remote memory, or a combination thereof. Additionally or alternatively, data embedded in the machine-readable code may be read **310** from the captured image. The embedded data may comprise configuration data. The embedded data may comprise a reference to a local or remote memory location of configuration data, in which case the appropriate configuration data is retrieved **315** from local memory, retrieved **320** from remote memory, or a combination thereof.

Following retrieval of the configuration data, the interactive value offer is configured **325** at least in part using the retrieved data. The interactive value offer is then executed **330,** which may comprise adjusting the offer based on further data **335** retrieved in real time, and presenting the interactive value offer to the user.

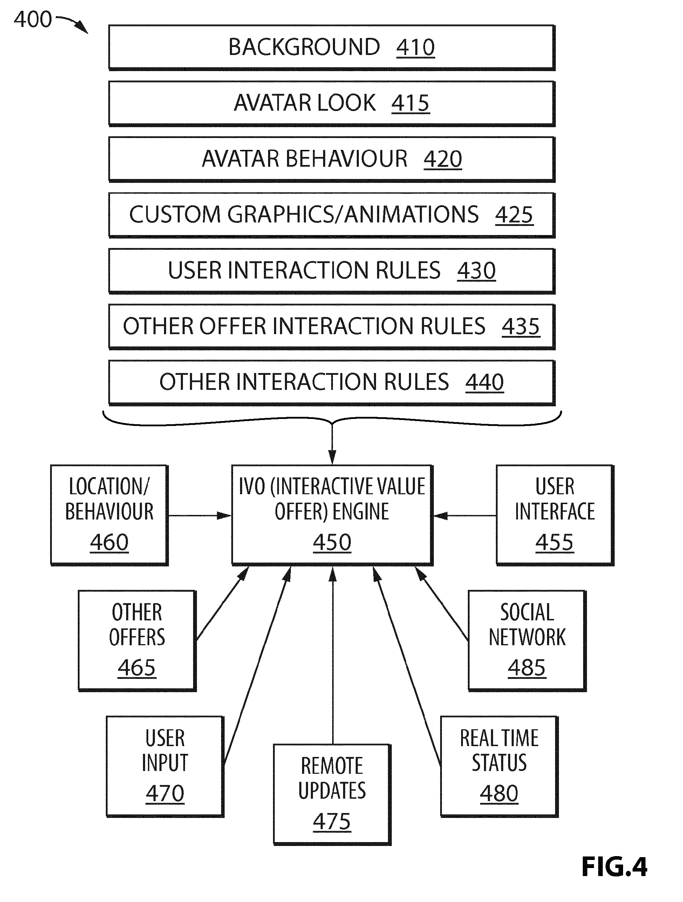

FIG. 4 illustrates operations associated with the configuration of an interactive value offer, in accordance with embodiments of the present technology. Configuration data **400** retrieved from memory may comprise data used for configuration of one or more of: a background **410** to display during the interactive value offer, an avatar look **415** for an avatar presenting the interactive value offer, avatar behaviour **420** during presentation of the offer, a reference to or specification of customized graphics or animations **425** to display during presentation of the offer, user interaction rules **430** specifying how and to what effect a user may interact with the value offer, interaction rules **435** specifying how the offer may interact with other offers, for example by competing or collaborating therewith, and other interaction rules **440,** such as rules for interacting based on location information, rules allowing or limiting social networking access, rules for obtaining, interacting with and presenting real-time information, and the like. The configuration data **400** is provided to an interactive value offer engine **450,** which constructs the interactive value offer and presents same via a user interface **455.** The engine **450** may receive and process other information to adjust the offer, such as one or more of: information **460** indicative of mobile device location, user behaviour, or both, information **465** indicative of other interactive value offers currently active on the mobile device, user input **470,** remote updates **475** relevant to the interactive value offer, such as merchant-initiated updates, information **480** indicative of real-time status information relevant to the offer, and social networking updates **485.**

### Providing Navigation Directions

Some embodiments of the present technology comprise: capturing a receivable code, for example an image of a machine-readable code, presented to the mobile device; obtaining location information for the mobile device, the location information including a current location of the mobile device; generating an interactive value offer, the interactive value offer directed toward a product or service associated with the receivable code, the interactive value offer including navigation directions from the current location of the mobile device to a location where the value offer can be fulfilled; and presenting the interactive value offer via a user interface of the mobile device. In some such embodiments, a single interactive value offer may be presented on its own. In other such embodiments, plural value offers, adjusted in response to each other, may be presented.

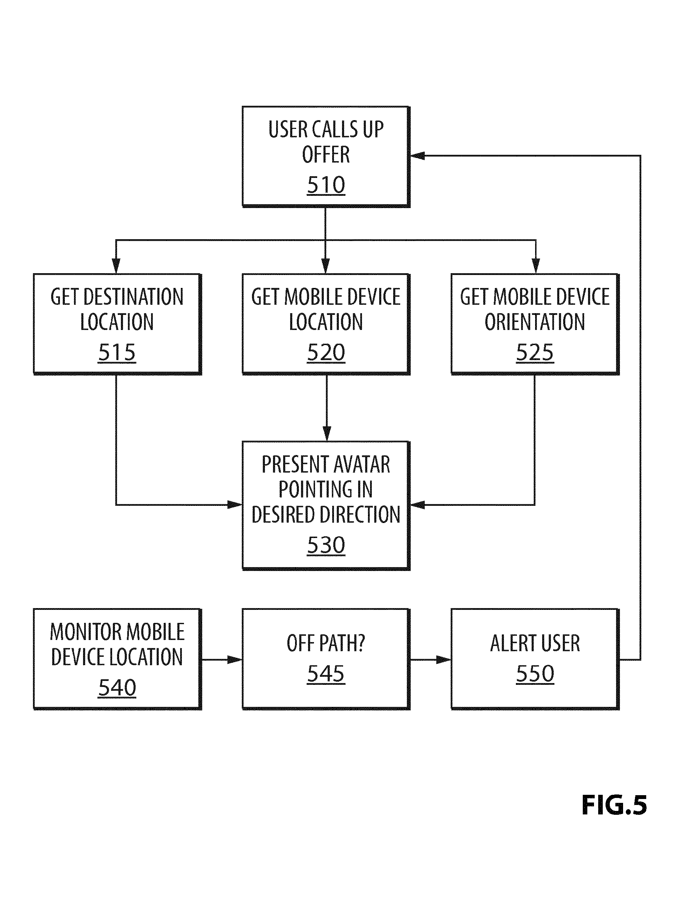

FIG. 5 illustrates aspects of providing navigation directions in association with an interactive value offer, in accordance with embodiments of the present technology. An interactive value offer may be called up **510** by a user, for example by training the mobile device camera onto the machine-readable code. This prompts the destination to be retrieved **515** from memory, the current location to be retrieved **520** from a location determination module, and the current orientation of the mobile device to be retrieved **525** from an orientation detection module. The advertising module may be configured, based on the above retrieved data, to generate an avatar pointing **530** to or along a predetermined route from the current location to the destination.

FIG. 5 further illustrates an optional feature wherein the current location is monitored **540** even when the interactive value offer is not actively being viewed, detecting **545** whether the mobile device has fallen off the predetermined path to the destination, and alerting the user **550** to this fact, so that they can call up the offer **510.** In some embodiments, active viewing of the interactive value offer may correspond to training a camera of the mobile device on an associated machine-readable code.

In some embodiments, navigation directions may comprise turn-by-turn directions, for example presented by an animated character associated with the interactive value offer. In some embodiments, navigation directions comprise pointing, for example performed by an animated character displayed on the mobile device display, in a certain desired direction. This requires not only knowledge of the location of the mobile device relative to the destination or a known route thereto, but also knowledge of the current orientation of the mobile device. A desired compass direction may be translated into a pointing direction by processing the desired compass direction together with the current orientation of the mobile device, as would be readily understood by a worker skilled in the art. The current orientation of the mobile device may be derived from integral devices such as a magnetometer, gyroscope, accelerometer, or the like, or a combination thereof, possibly along with GPS or other location determining technology.

As would be readily understood by a worker skilled in the art, navigation directions may depend on current location of the mobile device. Current location may be derived using GPS or other technology, such as assisted GPS, cell tower triangulation, other satellite-based positioning systems, deadreckoning systems, or the like, or a combination thereof. Various location determination means may be used as would be readily understood to a worker skilled in the art.

In some embodiments, by pairing current location, for example obtained through GPS of the mobile device, and compass direction with an interactive value offer associated with a machine-readable code, a prospective client can be dynamically entertained if they point their mobile device camera at a given machine-readable code associated with an interactive value offer, for example a restaurant food offer printed on a flyer or coupon. Upon pointing the camera at the machine-readable code, an animation may appear and actually speak and point the way to a location where the value offer can be redeemed, for example a restaurant. The animation may be presented overlaid over an image containing the machine-readable code, as is typically the case with augmented-reality animations. The user registers the game card by viewing it though the mobile device camera and the user's current location and location where the offer can be redeemed are calculated. Anytime the user points the camera at the machine-readable code, the animation can engage the user, telling them how much further, how long the line is already inside the restaurant or other location, and even tell them a number to call if they want to make a reservation. The user can start walking. If the user takes a wrong turn the mobile device may alert, prompting the user to train the camera back on the code, and the animation tells the user the correct way to go, physically pointing the right way. During the way the animation can advise the daily specials and upon arrival may optionally announce to the host or hostess that this user is entitled to a discount for walking a mile to the restaurant.

### Adjusting Interactive Value Offer based on User Behaviour

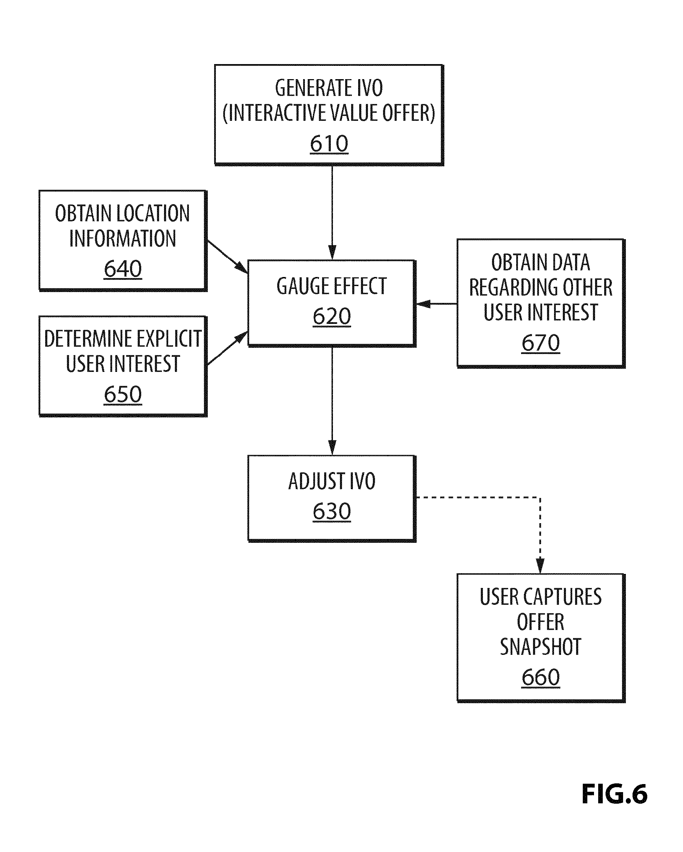

With reference now to FIG. 6, some embodiments of the present technology comprise: capturing a receivable code presented to the mobile device; generating **610** an interactive value offer, the interactive value offer directed toward a product or service associated with the receivable code; presenting the interactive value offer via a user interface of the mobile device; gauging **620** an effect of the interactive value offer; and adjusting **630** the interactive value offer based on said effect.

In some embodiments, gauging the effect of the interactive value offer comprises: obtaining location information **640** for the mobile device; and processing the location information to gauge the effect of the interactive value offer. The location information may include current geographic location and current direction of motion, and optionally a history of geographic locations.

In some embodiments, the animation may change based on proximity to the location where the value offer is to be redeemed. For example, the animation may offer different information, adjust its value offer, or the like, based on whether or not the mobile device is currently approaching the desired destination.

In some embodiments, the location information includes a current location of the mobile device. In some embodiments, the location information further includes one or more of: a direction in which the mobile device is moving, a speed at which the mobile device is moving, whether or not the mobile device is moving in a straight or purposeful manner, and the like. Gauging an effect of the interactive value offer based on the location information may then include inferring, based on the location information processed via a predetermined user behaviour model, to what degree the mobile device user may be intending to act upon the current value offer.

In some embodiments, and with further reference to FIG. 6, gauging the effect of the interactive value offer comprises determining **650** whether the user has expressed an explicit interest in the current offer. For example, an option may be provided to accept the current offer, for example by taking a snapshot of the mobile device display, which may later be used when redeeming the offer. Further adjustment of the interactive value offer is inhibited and the current offer is captured in the snapshot. If the current offer is not accepted, a new offer may be generated, either immediately or at a random or predetermined future time. Generation may be performed according to a predetermined deterministic or randomized algorithm.

In some embodiments, upon viewing a machine-readable code, a resultant animation can be configured to react in one or more of a variety of ways. The animation may be presented overlaid over an image containing the machine-readable code, as is typically the case with augmented-reality animations. For example, based on the user's location, the speed at which they are walking, the number of other users considering similar value offers and optionally headed in the same direction, the closeness to a destination location for the offer, and the like, the animation can change the value offer.

In some embodiments, and with further reference to FIG. 6, when a user decides a discount is high enough to entice them to go the restaurant they accept the offer, for example by 'snapping' **660** a photo of the current animation, which includes the current value offer or discount. This snapshot may then serve as a coupon to be shown when redeeming the value offer. This may facilitate generating user interest in the offer, sustaining user interest, or both.

Adjustment of the offer, for example based on explicit expressions of interest, location information, or a combination thereof, may be performed in order to entice the user to accept a value offer out of a series of offers, to discover a transaction and price which are mutually beneficial to the user and party making the value offer, or a combination thereof. For example, if a determination is made that the user is losing interest in a series of presented value offers, or even becoming annoyed by them, the asking price may be more deeply discounted, or "bonus" incentives, for example free enhancements to the offer, can be added.

In some embodiment, and with further reference to FIG. 6, gauging **620** the effect of the interactive value offer may be based at least in part on interest **670** of other mobile device users currently considering similar offers. This interest information may be provided, for example via an advertising server.

In some embodiments, when presenting a series of value offers, the asking price may be regularly decreased over time. However, in this case an astute user might quickly learn to simply wait until the asking price reached its minimum before accepting an offer. Other more complex strategies may be used, such as introducing randomness into the price adjustments and/or timing, cancelling all value offers with a certain probability to provide a sense of urgency to the user, adding free enhancements to the offer, adding limited-edition "prestige" offers, adjusting the offer by increasing one type of value while also decreasing another type of value, integrating the present value offer with other value offers for other products or services (for example, "buy product x from retailer A, get 50% off accessory y from retailer B"), or the like, or a combination thereof.

### Adjusting Value Offers in Response to Each Other

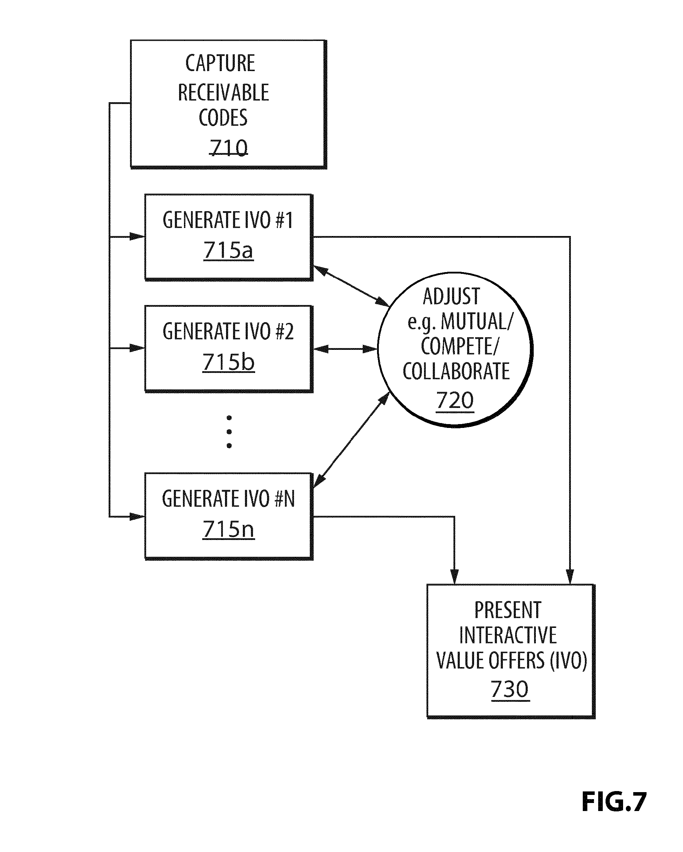

Referring now to FIG. 7, some embodiments of the present technology comprise capturing **710** one or more receivable codes, generating one or more interactive value offers **715a, 715b, 715n** based on the receivable codes, for example one offer for each code, adjusting **720** the interactive value offers in response to at least one other interactive value offer, and presenting **730** the one or more interactive value offers. Adjustment **720** of the interactive value offers may, in some embodiments, comprise mutual adjustments, competitive or collaborative adjustments, or the like.

In some embodiments, if it is detected that plural competing value offers are under consideration, each value offer may adjust in an attempt to win the user's attention and ultimately business. Competition may be for time, money, to satisfy a user's specific need such as eating, or the like. In one embodiment, each value offer is associated with a software module which is configured to detect that plural competing value offers are under consideration, for example by monitoring predetermined memory locations of the mobile device, user interface operations on the mobile device, communication operations by the mobile device, or the like. In some embodiments, a program associated with a value offer may be configured to attempt to discover whether other value offers are under consideration, without itself being discovered.

In some embodiments, a plurality different value offers may be viewed separately. For example, different machine-readable codes, each corresponding to a different value offer, may be viewed separately. In some embodiments, the mobile device may be configured to permit some animations to recognize that a user has just viewed other, possibly competing, value offers, and adjust the current value offer based on this information. For example, a current animation representing a restaurant offer may automatically offer a larger meal discount to encourage you to pass by a competitor. In other embodiments, the value offer may be collaborative, rather than purely competitive.

In some embodiments, a user may simply point their mobile device camera at a machine-readable code representing multiple value offers, such as a "food court" code, and a central coupon server may detect that multiple businesses are all being viewed at the same time. The businesses may then all bid in real time for the user's attention. Alternatively, local or remote software agents may bid on behalf of the multiple businesses.

In some embodiments, the central coupon server may allow a user to view "virtual" coupons or signs placed above each vendor in a food court or other location. This allows the vendors to bid for the user's attention, for example changing the value offer displayed overhead in real time. A user can subsequently accept one or more value offers, for example by taking a snapshot of the offer, which can then be presented to the vendor.

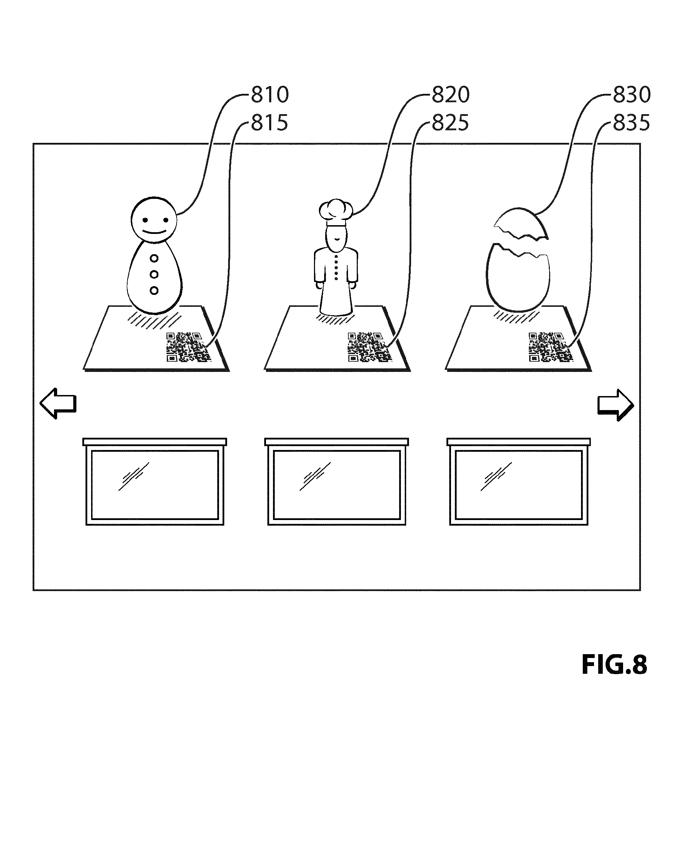

FIG. 8 illustrates a user display showing plural interacting value offers in accordance with embodiments of the present technology. Each interactive value offer is displayed as an augmented reality item **810, 820, 830.** Each augmented reality item is displayed based on a fiduciary marker associated with a corresponding machine-readable code **815, 825, 835.** As illustrated, the machine-readable codes are installed on signs over vendor locations, such as food court locations.

In some embodiments, competitive bidding between value offers may be performed automatically based on stored parameters associated with each of the plurality of value offers. In some embodiments, software agents may be used to perform bidding for each value offer. Such a software agent may be configured to present an initial offer, monitor other agents' offers, and, as necessary in order to compete with the other offers, adjust the initial offer by providing discounts, bonus items, promises of superior quality, an indication of favourable conditions such as no long lineups, or the like. Plural agents may adjust their offers in turn, until a predetermined "best offer" condition is reached. Offers may further be adjusted based on real-time information obtained from an advertising server.

In some embodiments, competitive bidding may be played out in an animated, entertaining manner. For example, avatars representing different value offers may appear to physically interact with each other in a manner which conveys their competitive behaviour. Various predetermined antics may be performed depending on the nature of the competition.

In some embodiments, plural value offers may be adjusted at least in part in a collaborative manner. For example, two value offers may collaborate to gain a user's attention, to compete with another value offer, or both. Collaboration may comprise, for example, offering a discount or free item at one retailer when a predetermined product is purchased from another retailer.

In some embodiments, an interactive value offer may be adjusted in response to another interactive value offer being presented on another mobile device. Different interactive value offers on different mobile devices may interact via a server in wireless communication with each of the different mobile devices. For example, upon an event such as being captured, being viewed, being accepted, or the like, an interactive value offer may transmit a message to the server to update its status. Other interacting value offers may contact the server to obtain the status of the interactive value offer, and adjust itself in response to said status.

The following is an example of interactive value offers on different mobile devices being adjusted in response to each other. A set of interactive value offers may be issued indicating that the first N (for example 10) customers to accept this offer receive a 15% discount on their purchase. When such an interactive value offer is presented on a mobile device, it may receive information from the server indicative of whether N other interactive value offers of the set have already been accepted. If so, the interactive value offer is adjusted, for example expiring or offering a lesser discount.

As another example, a set of interactive value offers may be issued indicating that the first N customers to reach the location at which the offer is to be redeemed receive a 20% discount. In this case, the interactive value offer may receive information from the server indicative of locations of mobile devices viewing other interactive value offers of the set, and present a map showing those locations. An engaging race may then ensue between users, with the interactive value offers being adjusted as users reach the target destination.

As yet another example, a set of interactive value offers may be issued indicating that the first customer to correctly answer a trivia question receives a 20% discount. In this case, the interactive value offer may receive information from the server indicative of whether or not the trivia question has been correctly answered yet.

### Providing Social Networking Opportunities

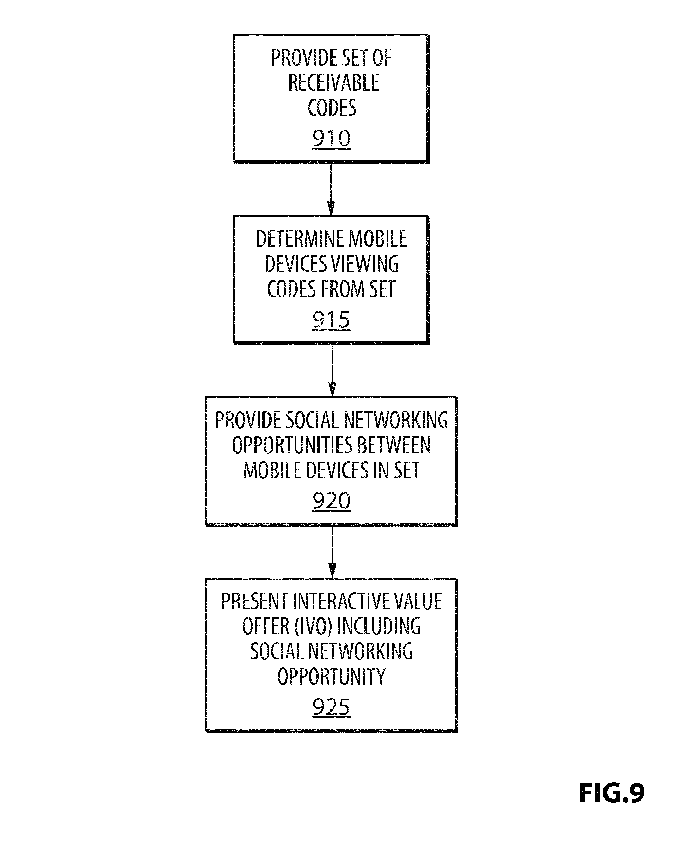

Referring now to FIG. 9, some embodiments of the present technology comprise: providing **910** a set of receivable codes for presentation to a plurality of mobile devices, the set of receivable codes associated with a product or service; determining **915** a subset of the plurality of mobile devices which have captured a receivable belonging to the set of receivable codes, said subset including the first mobile device; providing **920** an opportunity, via the first mobile device, for social networking with another mobile device of the subset; generating an interactive value offer for each mobile device in the subset, the interactive value offer directed toward the product or service, the interactive value offer comprising the opportunity for social networking and optionally adjusted based on said opportunity; and presenting **925** the interactive value offer via a user interface of each mobile device in the subset.

In some embodiments, the system is further configured to determine a set of mobile devices which have captured an image of a similar receivable code directed toward the product or service; the system-level advertising module further configured to provide an opportunity, via the mobile device, for social networking with one or more of the set of mobile devices; and wherein the interactive value offer comprises the opportunity for social networking.

In some embodiments, a user may be interested in meeting other users who are nearby and headed to the same location, such as a restaurant, to redeem a value offer. An interactive value offer may then facilitate real-time sharing of face images captured from the respective viewfinders of plural users' devices. Different users viewing different instances of a receivable code associated with the same value offer may then be given the option to view each other's images based on filtering criteria, and possibly choose to meet. For example, a restaurant may prefer to seat at least 2 persons per table, or singles may want to meet others for dining. Multiple images of other persons nearby might all pop up on a user's mobile device based on how close those others are to the user, to the restaurant, or both.

When the receivable code is a machine-readable code, the fact that users would be routinely looking into the viewfinder to examine the interactive value offer allows, in some embodiments, an opportunity for built-in front-facing cameras, which face the user when they are viewing the mobile device display, to capture user images for sharing.

In some embodiments, an animation associated with the value offer may be configured to provide an alert when other nearby users have also expressed an interest in a similar value offer for the same location. For each mobile device, interest in a particular value offer may be registered at a central server by sending a message from the mobile device. The server may then process interest messages and distribute, to those mobile devices for which interest has been registered, alerts indicating the interest of other users. User images can be captured and shared with some or all other users considering the same offer venue. This may allow a virtual group to form and show who is headed to the same offer venue, such as a store or restaurant, to redeem an offer.

In some embodiments, once social networking opportunities are identified based on receivable codes, relevant identification information is passed to a separate, for example third-party, social networking application. This provides the opportunity for social networking without requiring the present technology to also operate as a social networking platform. In other embodiments, the present technology may incorporate social networking capabilities, such as location sharing, photo sharing, chat functions, contact information exchange, and the like.

### Providing Real-Time Information

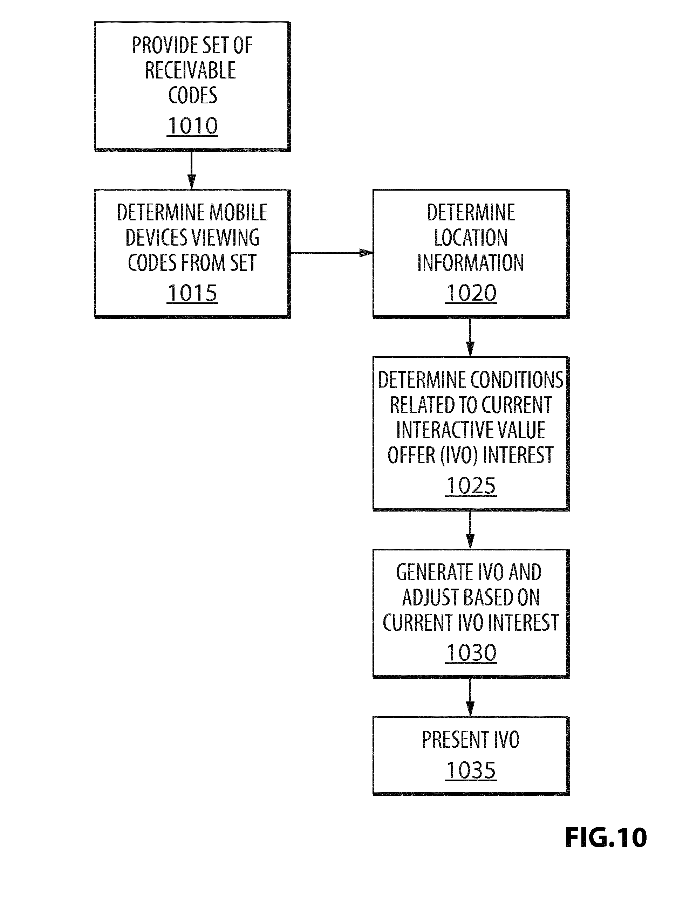

Referring now to FIG. 10, some embodiments of the present technology comprise delivery of advertising via a first mobile device, comprising: providing **1010** a set of receivable codes for presentation to a plurality of mobile devices, the set of receivable codes associated with a product or service; determining **1015** a subset of the plurality of mobile devices which have captured a receivable code belonging to the set of receivable codes, said subset including the first mobile device; determining **1020** location information for the subset of the plurality of mobile devices; determining **1025** one or more conditions related to current interest in the product or service, the one or more conditions based at least in part on said determined location information; generating **1030** an interactive value offer for the first mobile device, the interactive value offer directed toward the product or service, the interactive value offer adjusted based on said one or more current conditions; and presenting 1035 the interactive value offer via a user interface of the first mobile device.

In some embodiments, the system is further configured to determine: a set of mobile devices which have captured an image of a similar receivable code directed toward the product or service; location information for each mobile device of the set of mobile devices; and one or more conditions related to current interest in the interactive value offer, the one or more conditions based at least in part on said determined location information; and wherein the system-level advertising module is further configured to adjust the interactive value offer based on said one or more conditions.

In some embodiments, viewing an interactive value offer, such as a restaurant offer, may reveal further real-time information regarding the offer or venue associated with the offer. For example, animated images of the number of users actively viewing the value offer and currently deemed as being interested in the offer, for example by walking toward the restaurant, may be displayed on the mobile device as part of the offer. In some embodiments, multiple avatars, one for each user actively viewing the value offer, may be registered and displayed to other users. Other information, such as how crowded a restaurant is, wait times, the mix of male or female people headed to the restaurant, specific current clients of interest, current events happening at the venue, an indication of products, dishes, seats or services currently available or unavailable, or the like, may also be displayed. This may facilitate generating user interest in the offer.

### Computer Program Product

Acts associated with the method described herein can be implemented as coded instructions in a computer program product. In other words, the computer program product is a computer-readable medium upon which software code is recorded to execute the method when the computer program product is loaded into memory and executed on one or more microprocessors.

In some embodiments, the one or more microprocessors may comprise a microprocessor of a mobile device, and memory may be integrated within the mobile device, although data may optionally be downloaded into said memory from a remote server.

In some embodiments, the one or more microprocessors may comprise a microprocessor of a remote server, and at least a portion of the memory may be integrated within the server.

In some embodiments, plural microprocessors may be utilized, including a microprocessor of the mobile device and one or more microprocessors of one or more remote servers.

### Mobile Device

Embodiments of the present technology relate to a mobile device apparatus. The mobile device may be a special-purpose or general-purpose mobile computing device such as a portable game system, laptop, tablet, smartphone, or the like, configured via software, firmware, or both. As would be readily understood by a worker skilled in the art, such a computing device generally comprises components such as a user interface, processor, volatile memory, non-volatile memory, wired device interface ports, mobile device interface ports, wired network interface ports, wireless network interface ports, power supply, and the like.

One or more processors of the mobile device are generally configured to execute program instructions related to the present technology, the program instructions stored in memory. The mobile device may comprise one or more modules, which may, in some embodiments, be interpreted as functional modules enabled by different sets of program instructions stored in common memory and executed by a common set of processors.

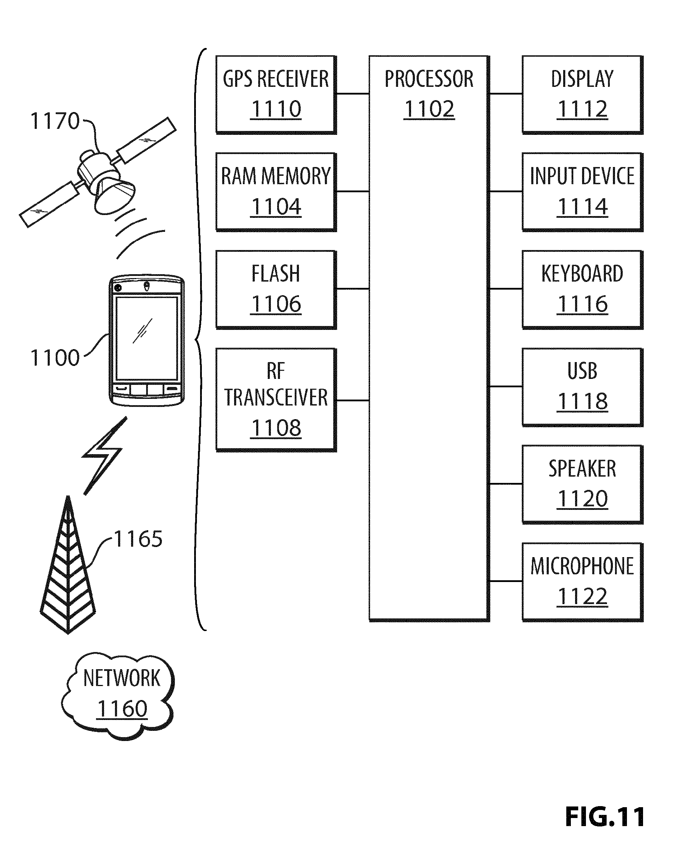

FIG. 11 is a block diagram depicting certain main components of an exemplary mobile device **1100.** It should be understood that this figure is intentionally simplified to show only certain components; the device **1100** may include other components beyond those shown in FIG. 11. The device **1100** includes a microprocessor **1102** (or simply a "processor") which interacts with memory in the form of RAM **1104** and flash memory **1106** to enable a variety of device functions and to execute an operating system for running software applications loaded on the device. The device **1100** includes a radiofrequency (RF) transceiver **1108** for communicating wirelessly with a base station **1165** of a wireless network **1160,** or alternatively or additionally for communicating directly with another peer device such as a mobile device, for example as may occur in some ad-hoc networks. The base station **1165** may be a cellular base station, wireless access point, or the like. The base station 1165 may change as the mobile device travels. The RF transceiver includes a wireless communication channel for transmitting and receiving data, such as wirelessly receivable codes and information related to one or more interactive value offers. The RF transceiver may further include a wireless voice channel for transmitting and receiving voice communications, for example concurrently with transmission and reception of data over the same or a separate logical or physical channel.

The device **1100** optionally includes a GPS receiver chipset **1110** for receiving GPS radio signals transmitted from one or more orbiting GPS satellites **1170.** The GPS receiver chipset **1110** can be embedded within the device or externally connected, such as, for example, a "Bluetooth" GPS puck or dongle. Other positioning systems may also be used in place of GPS, as would be readily understood by a worker skilled in the art.

In terms of input/output devices or user interfaces (UI's), the device **1100** typically includes a display **1112** (e.g. a small LCD screen), a thumbwheel or trackball **1114,** an optical navigation module, a keyboard **1116,** which in some embodiments may be integrated or enabled using the display such as a touch screen display, a USB **1118** or serial port for connecting to peripheral equipment, a speaker **1120** and a microphone **1122.** The device's display **1112** may optionally include a touch screen input device.

The mobile device **1100** sends and receives communication signals via the RF transceiver **1108.** When communicating wirelessly with a base station **1165** of a wireless network 1160, the device **1100** may communicate in accordance with one or more appropriate technologies such as: Global Systems for Mobile communications (GSM), General Packet Radio Service (GPRS), Code Division Multiple Access (CDMA) technologies, Wideband CDMA (WCDMA), whether 2G, 3G, 4G, High speed packet access (HSPA), Universal Mobile Telecommunication System (UMTS) based technologies, Long Term Evolution (LTE) technologies, Orthogonal Frequency Division Multiplexing (OFDM) technologies, Ultra-Wideband (UWB) technologies, WiFi or WiMAX technologies, or other communication technologies and protocols as would readily be understood by a worker skilled in the art. In some embodiments, the mobile device **1100** may be capable of operation using multiple protocols. The base station **1165** may be part of a wireless network, such as a cellular network, local-area network, wide-area network, wireless hotspot network, or the like. The mobile device, base station, network components, and the like, may be configured for data communication, voice communication, or a combination thereof, possibly using additional components, configurations and procedures where appropriate, such as SIM cards, authorization and authentication procedures, handoff procedures, and the like, as would be readily understood by a worker skilled in the art.

### Advertising Server

Some embodiments of the present technology comprise an advertising server, which may be a real or virtual server operatively coupled to the mobile device via a communication link at least in part comprising a wireless connection. For example, the advertising server and the mobile device may be coupled at least in part via a Wi-Fi^{™} communication link, along with a high-speed wired, wireless or optical Internet link. As another example, the advertising server and the mobile device may be coupled at least in part via a 3G or 4G mobile communication link provided by a telecommunication service provider, such as a cellular provider, WWAN provider, or the like.

An advertising server may comprise a computer web server or similar computer as would be readily understood by a worker skilled in the art. Thus, the server may comprise one or more processors, memory, databases, supporting hardware, and the like. An advertising server may be virtualized, spread across multiple instances of server hardware, or the like.

The advertising server may be configured to receive and process data from the mobile device, and to transmit data to the mobile device. For example, the advertising server may receive an image of a machine-readable code, or parameters thereof, which it may process to identify an appropriate interactive value offer to display on the mobile device. The interactive value offer or parameters indicative thereof may then be transmitted to the mobile device. This may be performed during an initialization phase, or it may be performed in an ongoing manner, so that the advertising server regularly controls operation of the interactive value offer being presented via the mobile device. The advertising server may receive and process other information, such as location information, user input, social networking messages and content, and the like.

In some embodiments, the advertising server is configured to facilitate communication between a plurality of mobile devices, each of the plurality currently considering the same value offer. For example, the advertising server may maintain a list of identifiers of mobile devices upon which a predetermined value offer is currently being presented. This list may be used as a basis for sharing messages, locations, pictures, and the like, if appropriate permissions are granted. Communication between mobile devices may be performed through the advertising server. Alternatively, the communication server may pass mobile device identity information to other communication services and associated hardware of a communication network, so that those communication services may be used, as would be readily understood by a worker skilled in the art.

In some embodiments, the advertising server is configured to facilitate communication with those merchants or other parties to which the value offers relate. For example, a merchant, or manual or automated agent acting on their behalf, may periodically update parameters for their interactive value offers, view performance statistics, or the like. In some embodiments, a merchant, or manual or automated agent acting on their behalf, may control aspects of their interactive value offers substantially in real time. For example, in this manner, a value offer or parameters thereof may be adjusted in real time in competition with another value offer.

In some embodiments, the advertising server may be configured to initiate or control wireless transmission of wirelessly receivable codes to mobile devices. Such receivable codes may be stored in memory of the advertising server and transmitted based on one or more triggers. For example, the advertising server may receive location information for mobile devices and initiate transmission of receivable codes based at least in part on said location information.

In some embodiments, the advertising server may store information related to different interactive value offers being presented on different mobile devices. The different interactive value offers may contact the advertising server to obtain the stored information and self-adjust in response to same. Additionally or alternatively, the advertising server may push relevant status information to mobile devices. For example, each mobile device entertaining an interactive value offer from a given interacting set may register with the advertising server. Whenever a relevant event occurs on one of the mobile devices, the mobile device may transmit the event information to the advertising server. The advertising server may then transmit such event information to other registered mobile devices.

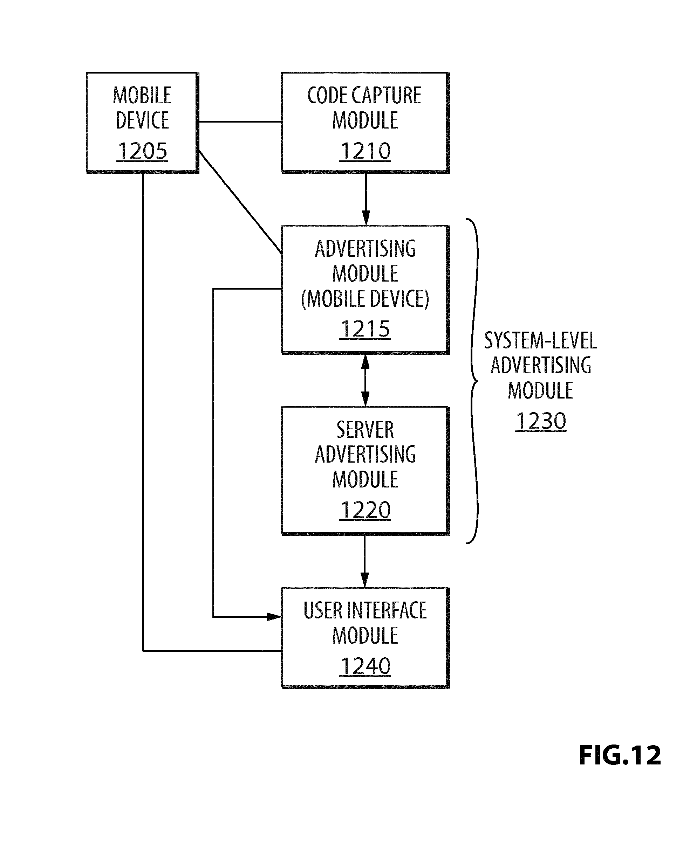

FIG. 12 illustrates functional aspects of a mobile device and associated system, in accordance with embodiments of the present technology. The mobile device and system are divided into functional modules, each of which may utilize hardware of a mobile device, server, or both, appropriately configured via firmware or software. As illustrated, the mobile device **1205** comprises a code capture module **1210,** a mobile device advertising module **1215,** and a user interface module **1240.** The image capture module **1210** may comprise a camera. The code capture module **1210** may comprise or be configured as an image capture module, such as a camera. The advertising module **1215** may comprise a processor, memory, and other supporting electronics. The user interface module **1240** may comprise a video display, speaker, keyboard, microphone, or the like, or a combination thereof. A server advertising module **1220** of the system is also illustrated, which may comprise server memory and processor electronics. The mobile device advertising module **1215** and the server advertising module **1220** may operate together to provide a system-level advertising module **1230,** configured to generate interactive value offers using both local and remote resources.

This new technology has been described in terms of specific implementations and configurations (and variants thereof) which are intended to be exemplary only. The scope of the exclusive right sought by the applicant is therefore intended to be limited solely by the appended claims.

## Claims

1. A method of delivering advertising via a mobile device (1100), the method comprising:
a) capturing (710) one or more receivable codes presented to the mobile device;
b) generating (715a, 715b, 715n) one or more interactive value offers, each of the one or more interactive value offers directed toward a product or service associated with at least one of the one or more receivable codes, each of the one or more interactive value offers adjusted (720) in response to at least one other interactive value offer; and
c) presenting (730) the one or more interactive value offers via a user interface of the mobile device.

2. The method according to claim 1, wherein at least one of the one or more receivable codes is a machine-readable code (200), and wherein the method further comprises capturing (300) an image of the machine-readable code.

3. The method according to claim 2, wherein the machine-readable code is provided on a handheld item (121, 123).

4. The method according to any one of claims 1 to 3, wherein the interactive value offer is presented via augmented reality.

5. The method according to any one of claims 1 to 4, further comprising obtaining location information (460, 520) for the mobile device, the location information including a current location of the mobile device;
wherein generating the interactive value offer comprises generating navigation directions from the current location of the mobile device to a location where the interactive value offer can be fulfilled; and wherein presenting the interactive value offer comprises presenting (530) the navigation directions.

6. The method according to any one of claims 1 to 5, further comprising obtaining location information (640) for the mobile device and processing the location information to gauge an effect (620) of the interactive value offer; and wherein the interactive value offer is adjusted (630) based on the gauged effect.

7. The method according to any one of claims 1 to 6, further comprising determining a set of mobile devices (1015) which have captured a similar receivable code directed toward the product or service; determining location information (1020) for each mobile device of the set of mobile devices; and determining one or more conditions (1025) related to current interest in the interactive value offer, the one or more conditions based at least in part on said determined location information; and wherein the interactive value offer is adjusted (1030) based on said one or more conditions.

8. The method according to any one of claims 1 to 7, further comprising determining a set of mobile devices (915) which have captured a similar receivable code directed toward the product or service; and providing an opportunity (920), via the mobile device, for social networking with one or more of the set of mobile devices; and wherein the interactive value offer comprises (925) the opportunity for social networking.

9. A mobile device (100, 1205) comprising:
a) a code capture module (1210) configured to capture one or more receivable codes presented to the mobile device;
b) an advertising module (130, 1215) operatively coupled to the code capture module, the advertising module configured to generate (715a, 715b, 715n) one or more interactive value offers, each of the one or more interactive value offers directed toward a product or service associated with at least one of the one or more receivable codes, each of the one or more interactive value offers adjusted (720) in response to at least one other interactive value offer; and
c) a user interface module (110, 1240) operatively coupled to the advertising module, the user interface module configured to present (730) the one or more interactive value offers via a user interface of the mobile device.

10. The mobile device according to claim 9, wherein at least one of the one or more receivable codes is a machine-readable code (200), and wherein the code capture module comprises an image capture module (105) configured to capture an image of the machine-readable code.

11. The mobile device according to claim 10, wherein the machine-readable code is provided on a handheld item (121, 123).

12. The mobile device according to any one of claims 9 to 11, wherein the interactive value offer is presented via augmented reality.

13. The mobile device according to any one of claims 9 to 12, the mobile device further configured to obtain location information (460, 520) for the mobile device, the location information including a current location of the mobile device; the advertising module further configured to generate navigation directions from the current location of the mobile device to a location where the interactive value offer can be fulfilled; and wherein the user interface module is further configured to present (530) the navigation directions as part of the interactive value offer.

14. The mobile device according to any one of claims 9 to 13, the mobile device further configured to obtain location information (640) for the mobile device; and wherein the advertising module is configured to process the location information to gauge an effect of the interactive value offer and adjust (630) the interactive value offer based on the gauged effect.

15. The mobile device according to any one of claims 9 to 14, wherein a set of mobile devices which have captured a similar receivable code directed toward the product or service is determined (1015), location information for each mobile device of the set of mobile devices is determined (1020); and one or more conditions related to current interest in the interactive value offer are determined (1025), the one or more conditions based at least in part on said determined location information; and wherein the advertising module is further configured to adjust (1030) the interactive value offer based on said one or more conditions.

16. The mobile device according to any one of claims 9 to 15, wherein a set of mobile devices which have captured a similar receivable code directed toward the product or service is determined (915); and wherein the advertising module is further configured to provide (920) an opportunity for social networking with one or more of the set of mobile devices; and wherein the interactive value offer comprises (925) the opportunity for social networking.

17. A computer program product for delivering advertising via a mobile device, the computer program product comprising code which, when loaded into memory and executed on a processor of a mobile device, is adapted to perform the following:
a) capturing (710) one or more receivable codes presented to the mobile device;
b) generating (715a, 715b, 715n) one or more interactive value offers, each of the one or more interactive value offers directed toward a product or service associated with at least one of the one or more receivable codes, each of the one or more interactive value offers adjusted (720) in response to at least one other interactive value offer; and
c) presenting (730) the one or more interactive value offers via a user interface of the mobile device.

## Amended claims

### Amended claims in accordance with Rule 137(2) EPC.

**1.** A method of delivering advertising via a mobile device (1100), the method comprising:
a) capturing (710) a plurality of receivable codes presented to the mobile device;
b) generating (715a, 715b, 715n) a plurality of interactive value offers, each of the plurality of interactive value offers directed toward a product or service associated with at least one of the plurality of receivable codes, each of the plurality of interactive value offers mutually adjusted (720) in response to each other; and
c) presenting (730) the plurality of interactive value offers via a user interface of the mobile device.

**2.** The method according to claim 1, wherein at least one of the plurality of receivable codes is a machine-readable code (200), and wherein the method further comprises capturing (300) an image of the machine-readable code.

**3.** The method according to claim 2, wherein the machine-readable code is provided on a handheld item (121, 123).

**4.** The method according to any one of claims 1 to 3, wherein the plurality of interactive value offers are presented via augmented reality.

**5.** The method according to any one of claims 1 to 4, further comprising obtaining location information (460, 520) for the mobile device, the location information including a current location of the mobile device; wherein generating at least one of the interactive value offers comprises generating navigation directions from the current location of the mobile device to a location where the at least one interactive value offer can be fulfilled; and wherein presenting the at least one interactive value offer comprises presenting (530) the navigation directions.

**6.** The method according to any one of claims 1 to 5, further comprising obtaining location information (640) for the mobile device and processing the location information to gauge an effect (620) of at least one of the interactive value offers; and wherein the at least one interactive value offer is adjusted (630) based on the gauged effect.

**7.** The method according to any one of claims 1 to 6, further comprising determining a set of mobile devices (1015) which have captured a similar receivable code directed toward the product or service; determining location information (1020) for each mobile device of the set of mobile devices; and determining one or more conditions (1025) related to current interest in at least one of the interactive value offers, the one or more conditions based at least in part on said determined location information; and wherein the at least one interactive value offer is adjusted (1030) based on said one or more conditions.

**8.** The method according to any one of claims 1 to 7, further comprising determining a set of mobile devices (915) which have captured a similar receivable code directed toward the product or service; and providing an opportunity (920), via the mobile device, for social networking with one or more of the set of mobile devices; and wherein at least one of the interactive value offers comprises (925) the opportunity for social networking.

**9.** A mobile device (100, 1205) comprising:
a) a code capture module (1210) configured to capture a plurality of receivable codes presented to the mobile device;
b) an advertising module (130, 1215) operatively coupled to the code capture module, the advertising module configured to generate (715a, 715b, 715n) a plurality of interactive value offers, each of the plurality of interactive value offers directed toward a product or service associated with at least one of the plurality of receivable codes, each of the plurality of interactive value offers mutually adjusted (720) in response to each other; and
c) a user interface module (110, 1240) operatively coupled to the advertising module, the user interface module configured to present (730) the plurality of interactive value offers via a user interface of the mobile device.

**10.** The mobile device according to claim 9, wherein at least one of the plurality of receivable codes is a machine-readable code (200), and wherein the code capture module comprises an image capture module (105) configured to capture an image of the machine-readable code.

**11.** The mobile device according to claim 10, wherein the machine-readable code is provided on a handheld item (121, 123).

**12.** The mobile device according to any one of claims 9 to 11, wherein at least one of the interactive value offers is presented via augmented reality.

**13.** The mobile device according to any one of claims 9 to 12, the mobile device further configured to obtain location information (460, 520) for the mobile device, the location information including a current location of the mobile device; the advertising module further configured to generate navigation directions from the current location of the mobile device to a location where at least one of the interactive value offers can be fulfilled; and wherein the user interface module is further configured to present (530) the navigation directions as part of the at least one interactive value offer.

**14.** The mobile device according to any one of claims 9 to 13, the mobile device further configured to obtain location information (640) for the mobile device; and wherein the advertising module is configured to process the location information to gauge an effect of at least one of the interactive value offers and adjust (630) the at least one interactive value offer based on the gauged effect.

**15.** The mobile device according to any one of claims 9 to 14, wherein a set of mobile devices which have captured a similar receivable code directed toward the product or service is determined (1015), location information for each mobile device of the set of mobile devices is determined (1020); and one or more conditions related to current interest in at least one of the interactive value offers are determined (1025), the one or more conditions based at least in part on said determined location information; and wherein the advertising module is further configured to adjust (1030) the at least one interactive value offer based on said one or more conditions.

**16.** The mobile device according to any one of claims 9 to 15, wherein a set of mobile devices which have captured a similar receivable code directed toward the product or service is determined (915); and wherein the advertising module is further configured to provide (920) an opportunity for social networking with one or more of the set of mobile devices;
and wherein at least one of the interactive value offers comprises (925) the opportunity for social networking.

**17.** A computer program product for delivering advertising via a mobile device, the computer program product comprising code which, when loaded into memory and executed on a processor of a mobile device, is adapted to perform the following:
a) capturing (710) a plurality of receivable codes presented to the mobile device;
b) generating (715a, 715b, 715n) a plurality of interactive value offers, each of the plurality of interactive value offers directed toward a product or service associated with at least one of the plurality of receivable codes, each of the plurality of interactive value offers mutually adjusted (720) in response to each other; and
c) presenting (730) the plurality of interactive value offers via a user interface of the mobile device.
